# EUROPEAN PATENT SPECIFICATION

(11) **EP 2 173 059 B1**
(45) Date of publication and mention of the grant of the patent: **03.07.2013**
(21) Application number: 07855792.3
(22) Date of filing: 25.12.2007
(51) Int. Cl.: H04L 12/00, H04L 29/00, H04M 3/51

(54) **METHOD AND SYSTEM FOR REALIZING MONITORING OF CALLING CENTER SYSTEM BY SIP SOFT-TERMINAL**
VERFAHREN UND SYSTEM ZUR REALISIERUNG EINER ÜBERWACHUNG EINES ANRUFCENTERSYSTEMS DURCH EIN SIP-SOFT-ENDGERÄT
PROCÉDÉ ET SYSTÈME SERVANT À RÉALISER LE CONTRÔLE D'UN SYSTÈME DE CENTRE D'APPEL GRÂCE À UN TERMINAL LÉGER SIP

(30) Priority: 29.06.2007 CN 200710076305
(43) Date of publication of application: 07.04.2010
(73) Proprietor: ZTE Corporation, Shenzhen, Guangdong 518057 (CN)
(72) Inventor: XIA, Xianfeng, Guangdong 518057 (CN)
(74) Representative: Hatzmann, Martin
(86) International application number: PCT/CN2007/003788
(87) International publication number: WO 2009/003334

(56) References cited:
- EP-A2- 0 644 510
- WO-A1-2007/004938
- CN-A- 1 449 161
- CN-A- 1 968 480
- US-A1- 2006 109 976

## Description

### Filed of the Invention

The present invention relates to data communication field, more particularly, relates to a method for a calling center to monitor the voice contents of communication between a telephonist and a customer by using SIP (Session Initial Protocol) soft terminal in customer service system based on the network of the next generation.

### Background of the Invention

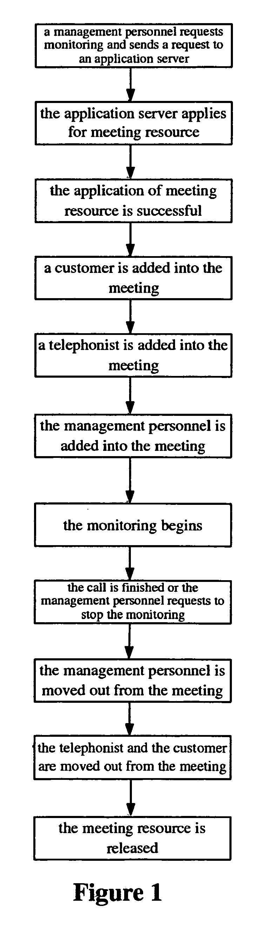

In the present calling center system based on the network of the next generation, during a telephonist serving a customer, in order to supervise the service quality of the telephonist, management personnel needs to monitor the voice contents of the communication between the telephonist and the customer. As shown in Figure 1, the existing calling center system monitor in the way as follows: 1. the management personnel selects a telephonist to be monitored and sends a monitoring request to an application server by using the seat software of the management personnel; 2. a control device such as the application server and the like applies for meeting resource to a resource device such as a media server and the like; 3. the media server makes a response of application success; 4. the monitored telephonist is added into the applied meeting; 5. the customer in communication with the telephonist is added into the applied meeting; 6. the monitoring personnel is added into the meeting so that the management personnel can monitor the voice contents of communication between the monitored telephonist and the customer; 7. when the management personnel stops monitoring or the call between the telephonist and customer is finished, the application server disconnects the monitoring personnel from the meeting; 8. the application server disconnects the customer and telephonist from the meeting; 9. the application server requests to delete the applied meeting resource.

There may be the following disadvantages in the above methods: firstly, the number of the interaction steps is too large which increases the complexity of the system and tends to cause failure of monitoring and bad effect of monitoring; secondly the meeting resources of the media server or other resource devices will be occupied by each monitoring so that the monitoring may be failed in case of failed application for resources by the application server; and lastly, the networking by this means is complicated and a large amount of meeting resources need to be configured by the media server, which will increase the cost of the system. It can thus been seen that there are certain disadvantages in the existing technologies, which need to be improved.

It is noted that patent publication US 2006/0109976 discloses a mid-point call management node that is subjected to monitoring through a workstation.

### Summery of the Invention

The object of the present invention is to provide a method and system for calling center system to monitor by using SIP soft terminal, to solve the problems that the number of the steps of monitoring methods in the existing calling center system is too large and the large amount of meeting resources need to be configured by the media server which increase the cost of the system.

According to the invention, a method is provided as defined in claim 1.

It can be added between Steps 03 and 04 in the monitoring method a step of the monitor selecting to finish the monitoring, whose procedure is as follows.

It is judged whether the monitoring personnel stops the monitoring;

If the monitoring personnel stops the monitoring, the monitoring personnel sends a monitoring end request to the SIP soft terminal of the monitored telephonist via the application server by means of a position module. After receiving the monitoring end request, the SIP soft terminal stops the voice mixing and the sending of voice data, and monitoring is ended;

If the monitoring personnel does not stop the monitoring, then performing Step 04.

The SIP soft terminal of the monitored telephonist performs the voice mixing and the sending of voice data in the above Step 02 as follows:
Step 001, when the monitoring is activated, the monitored telephonist saves by a position system the voice information of the communication with the customer into a buffering area of a sound inputting device, the SIP soft terminal of the monitored telephonist periodically writes the voice data in the buffering area of the sound inputting device into an internal buffering area and simultaneously the SIP soft terminal also writes into another internal buffering area the voice data sent to the position system by the customer side;
Step 002, a voice mixing process is performed on the voice data in the two internal buffering areas using voice mixing algorithm, and afterwards the processed voice data is coded and packaged according to the coding and decoding method designated by the voice monitoring, and then the data package is sent to the IP address and port of the SIP soft terminal of the monitoring personnel for receiving voice data package.

The voice mixing of the Step 002 in the Step 02 is performed as follows:

The data in the two internal buffering areas are respectively transformed into linear coding, which are then subjected to a corresponding summation operation to obtain the required voice data which is used for coding and sent to the SIP soft terminal of the monitoring personnel.

The SIP soft terminal of the monitoring personnel receives the data package sent by the SIP soft terminal of the monitored personnel and performs the monitoring after decoding.

Further, according to the invention, a calling center system is provided as defined in claim 6.

Meanwhile, the SIP soft terminal of the monitored telephonist side comprises: a data forwarding unit for picking up the voice data of communication between the monitored telephonist and the customer saved in the buffering area of the sound inputting device of the monitored telephonist side and writing it into one internal buffering area of the position module; a voice data receiving unit for setting up a bidirectional voice data link with the customer, receiving the voice data sent from the customer side and writing the data into the other internal buffering area of the position module of the monitored telephonist; a voice mixing unit for performing a voice mixing algorithm process on the voice data in the two internal buffering areas; a coding unit for coding the voice data output by the voice mixing unit according to the coding and decoding method designated by the monitoring voice; a sending unit for packaging the voice data output by the coding unit and sending it to the IP address and port of the SIP soft terminal module of the monitoring personnel side for receiving voice data package.

Meanwhile, the voice mixing unit comprises: a linear coding unit for transforming the voice data in the above two internal buffering areas into linear coding; a summation unit for performing summation operation on the linear coding data in the two internal buffering areas with the voice data output by the summation unit received by the coding unit.

Meanwhile, the SIP soft terminal of the monitoring personnel side comprises: a data receiving unit for receiving the data package sent from the SIP soft terminal of the monitored telephonist; a decoding unit for decoding the data package received by the data receiving unit.

Also, a computer program product is provided as defined in claim 10.

The present invention obtains the advantages as follows: the added SIP soft terminal is used to monitor the voice information of the communication between a telephonist and a customer, significantly simplifying the flow of monitoring the communication voice between the telephonist and the customer and reducing the possibility of failed and incomplete monitoring. Moreover, it is not needed to occupy meeting resources of media server during the monitoring, greatly reducing the investment cost of the whole customer service system for the media server, which therefore possesses a promising future of popularization.

### Brief Description of the Drawings

Figure 1 is a schematic flow chart showing monitoring the voice of the communication between a telephonist and a customer in the prior art;
Figure 2 is a flow chart showing monitoring the communication voice between a telephonist and a customer by using the SIP soft terminal according to the present invention;
Figure 3 is a structural block diagram showing the calling center system of the present invention; and
Figure 4 is a structural schematic diagram showing the SIP soft terminals of the monitored telephonist side and the monitoring personnel side.

### Detailed Description

The embodiments and flow of the present invention will be illustrated in combination with the accompanying drawings in details as follows:

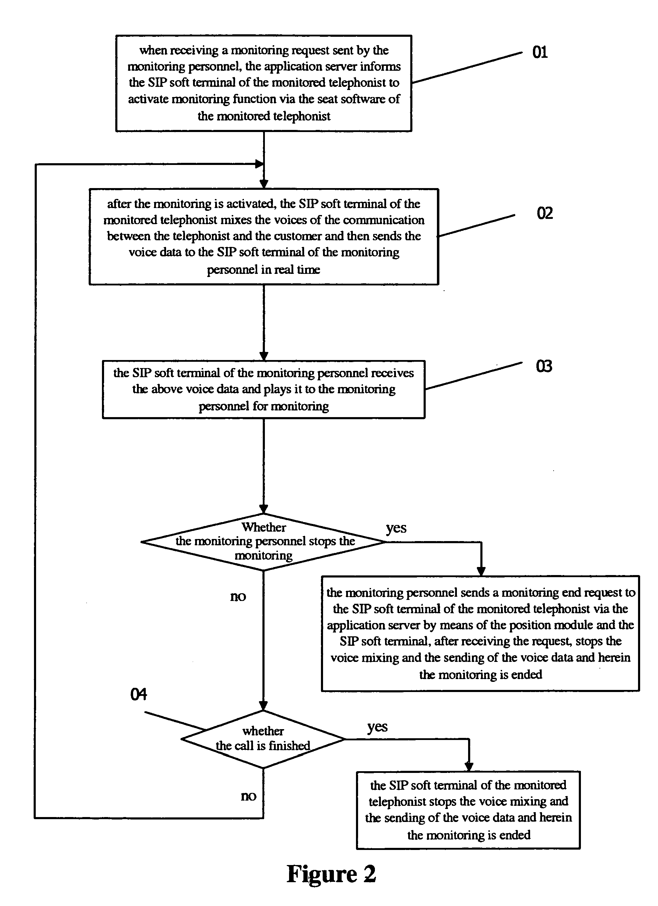

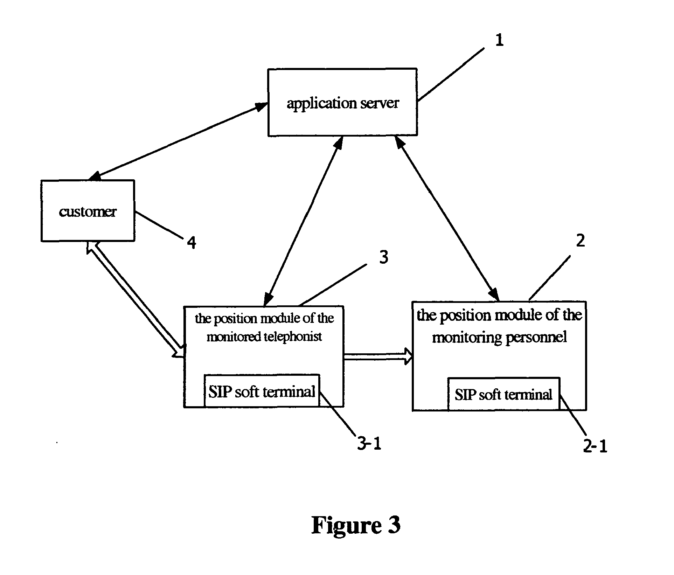

As shown in Figures 2 and 3, the method for a calling center system to monitor by using SIP soft terminal according to the present invention is performed as follows:
Step 01, when receiving a monitoring request sent by a monitoring personnel, an application server 1 informs the SIP soft terminal of the monitored telephonist to activate monitoring function via the seat software of the monitored telephonist;
Step 02, after the monitoring is activated, the SIP soft terminal 3-1 of the monitored telephonist mixes the voices of the communication between the telephonist and the customer and then sends the voice data to the SIP soft terminal 2-1 of the monitoring personnel in real time;
Step 03, the SIP soft terminal 2-1 of the monitoring personnel receives the above voice data and plays it to the monitoring personnel for monitoring; Step 04, it is judged whether the call is finished,
Step 04, it is judged whether the call is finished, wherein
if it is finished, the SIP soft terminal 3-1 of the monitored telephonist stops the voice mixing and the sending of voice data, and herein the monitoring is ended; and
if it is not finished, return to Step 2 and repeat. The above SIP soft terminal refers to a telephone terminal which is realized by a software manner, that is, by the interaction between the SIP protocol and a soft change device or other control devices and which is capable of achieving functions of initiating, ringing, answering and picking. The above judging process can be completed by the position system of the monitored telephonist. For example, if the monitored telephonist or the customer stops the call, the position system directly informs the SIP soft terminal to stop sending data package to the monitoring personnel side.

As shown in Figures 2 and 3, it is added between Steps 03 and 04 a step of the monitoring personnel selecting to finish the monitoring which is performed as follows:

It is judged whether the monitoring personnel stops the monitoring, wherein
if the monitoring personnel stops the monitoring, the monitoring personnel sends a monitoring end request to the SIP soft terminal 3-1 of the monitored telephonist via an application server 1 by means of a position module 2, and the SIP soft terminal 3-1, after receiving the request, stops the voice mixing and the sending of voice data, and herein the monitoring is ended; and
if the monitoring personnel does not stop the monitoring, then Step 04 is performed. The above judging process can be completed by the application server 1 forwarding control signal, wherein, for example, if the monitoring personnel stops the monitoring, a monitoring end request should be immediately sent to the application server 1 which then forwards the request to the position system of the monitored telephonist and the soft terminal 3-1 of the monitored telephonist decides whether to stop sending the data package to the monitoring side by judging whether the position system receives the monitoring end request.

The monitoring method of the present invention mainly aims to simplify the existing flow of recording the communication voice between a telephonist and a customer, which reduces the demand on occupation of media server resources. With the present invention, it is conveniently achieved the function of recording the communication voice between a telephonist and a customer by modifying the software of the SIP soft terminal. Moreover, the SIP soft terminal is used to reduce the monitoring flow so that it is difficult to produce the problems of failed monitoring and incomplete play of monitoring.

With the present invention, it is also added with the function of voice mixing of the SIP soft terminal. As it is the voices of a telephonist and a customer to be monitored, in addition to receiving the media stream from the accessed customer, receiving the voice of the telephnonist is necessary, and the voices of the two directions are mixed. As shown in Figures 2, 3 and 4, in the above Step 02, the SIP soft terminal 3-1 of the monitored telephonist mixes the voice and sends the voice data in the process as follows:
Step 001, when of the monitoring is activated, the monitored telephonist saves by the position system the voice information of the communication with the customer into a buffering area 5 of a sound inputting device, the SIP soft terminal 3-1 of the monitored telephonist periodically writes the voice data in the buffering area of the sound inputting device into an internal buffering area 6-1 and simultaneously the SIP soft terminal 3-1 also writes the voice data sent to the position system from the customer side into the other internal buffering area 6-2;
Step 002, the voice data in the above two internal buffering areas are mixed using a voice mixing algorithm, and afterwards the processed voice data is coded and packaged according to a coding and decoding method designated in the voice monitoring, and then the data package is sent to the IP address and port of the SIP soft terminal 2-1 of the monitoring personnel for receiving a voice data package. The voice mixing process in the Step 002 can be performed as follows: firstly the data in the above two internal buffering areas are respectively transformed into linear coding, which is then subjected to a corresponding summation operation to obtain the required voice data which is used for coding and is sent to the SIP soft terminal 2-1 of the monitoring personnel. The SIP soft terminal 2-1 of the monitoring personnel receives the data package sent from the SIP soft terminal 3-1 of the monitored personnel and achieves the monitoring after decoding. The monitoring personnel can thereby hear the voice of the communication between the monitored personnel and the customer.

As shown in Figure 3, the above monitoring method can be achieve by the following calling center system comprising an application server 1 for calling control and a position module for answering a customer 4. The position module includes a position module 3 of the monitored telephonist and a position module 2 of the monitoring personnel. Additionally, the calling center system further comprises: SIP soft terminals used on the position module of the monitored telephonist and the monitoring personnel, wherein the SIP soft terminal 3-1 running in the side of the position module 3 of the monitored telephonist serves to set up a bidirectional voice data link with the customer 4 and receive the voice data, to receive the monitoring request sent to the position module 3 of the monitored telephonist by the application server 1, and to mix the voice data of the monitored telephonist and that the voice of the customer 4 and package and send it to the SIP soft terminal 2-1 of the monitoring personnel; and the SIP soft terminal 2-1 running in the side of the position module 2 of the monitoring personnel serves to receive the data package sent by the SIP soft terminal 3-1 of the monitored telephonist side and play it to the monitoring personnel for monitoring.

The above application server, also called a call control server, is the core component of the calling center system and mainly used for functions of completing position status, routing queue and calling flow control in the calling center system. The above position module is also one of the core components of the calling center system, serving to achieve the functions necessary for a telephonist in calling center system, such as answering, breaking in and call forwarding. The above SIP soft terminal achieves the functions of calling, answering, picking, bidirectional voice mixing and sending voice data to a designated IP addresses mainly by software. The calling center system of the present invention has a simple structure. The monitoring flow of the above method can be achieved just by adding an SIP soft terminal on the monitored telephonist and the monitor sides.

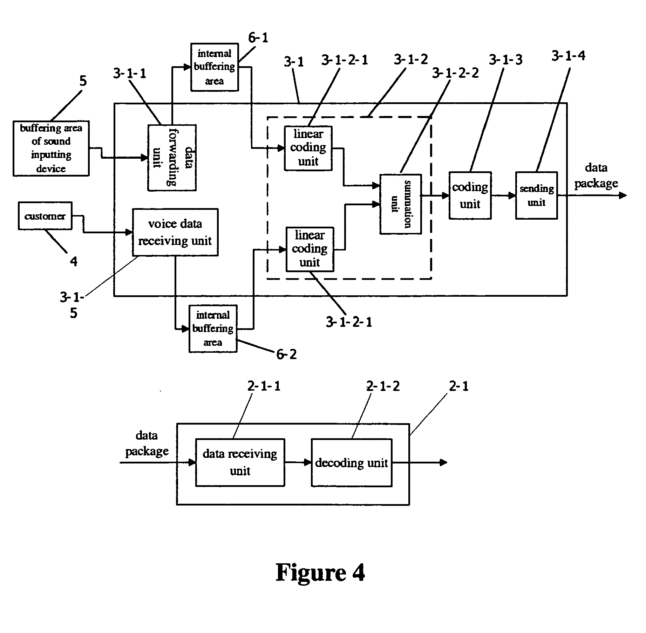

As shown in Figure 4, the SIP soft terminal 3-1 of the monitored telephonist side comprises a data forwarding unit 3-1-1, a voice mixing unit 3-1-2, a voice data receiving unit 3-1-5, a coding unit 3-1-3 and a sending unit. The data forwarding unit 3-1-1 is used to pick up the voice data of the communication between the monitored telephonist and the customer 4 saved in the buffering area 5 of the sound inputting device of the monitored telephonist side and write it into one internal buffering area 6-1 of the position module; the voice data receiving unit 3-1-5 is used to set up a bidirectional voice data link with the customer 4, receive the voice data sent from the customer 4 side and write the data into the other internal buffering area 6-2 of the position module of the monitored telephonist; the voice mixing unit 3-1-2 is used to perform a voice mixing algorithm process on the voice data in the above two internal buffering areas; the coding unit 3-1-3 is used to code the voice data output by the voice mixing unit 3-1-2 according to a coding and decoding method designated by monitoring voice; the sending unit 3-1-4 is used to package the voice data output by the coding unit 3-1-3 and send it to the IP address and port on the SIP soft terminal 2-1 of the monitoring personnel side for receiving a voice data package. The above data receiving unit 3-1-5 can be also used to receive the monitoring request sent to the position module of the monitored telephonist by the application server 1.

As shown in Figure 4, the voice mixing unit 3-1-2 comprises a linear coding unit 3-1-2-1 and a summation unit 3-1-2-2. The voice data in the above two internal buffering areas are respectively transformed into the linear coding by the linear coding unit 3-1-2-1. The summation unit 3-1-2-2 is used to perform summation operation on the linear coding data in the above two internal buffering areas. The voice data output by the summation unit 3-1-2-2 is received by the coding unit.

As shown in Figure 4, the SIP soft terminal 2-1 of the monitoring personnel side comprises: a data receiving unit 2-1-1 and a decoding unit 2-1-2. The data receiving unit 2-1-1 is used to receive the data package sent from the SIP soft terminal 3-1 of the monitored telephonist side; the decoding unit 2-1-2 is used to decode the data package received by the data receiving unit 2-1-1. The decoding unit 2-1-2 herein and the above coding unit 3-1-3 are cooperated with each other.

To sum up, the method and system for monitoring the voices of the communication between a telephonist and a customer by using a SIP soft terminal according to the present invention can greatly simplify the complex flow of monitoring the voices of the communication between a telephonist and a customer in the existing technology, reduce the occupation on the meeting resource of the media server and therefore reduce the investment cost of operators for the custom service system, which increases the operation efficiency of the customer service system, enhances competition of operator, and improves image of operator, showing obvious progress and practicability.

It should be understood that the steps and system structure of the SIP soft terminal to achieve monitoring the voices of the communication between a telephonist and a customer are illustrated in detail, however, it is not intended to restrict the present invention. The scope of protection of the present invention should be defined by the enclosed claims.

## Claims

1. A method for a calling center system to monitor by using a SIP soft terminal, wherein the method comprises the following steps:
Step 01, when receiving a monitoring request sent by monitoring personnel, an application server (1) informs the SIP soft terminal of a monitored telephonist (3-1) to activate a monitoring function via agent software of the monitored telephonist;
Step 02, after the monitoring function has been activated, the SIP soft terminal of the monitored telephonist (3-1) mixes the voices of the communication between the telephonist and a customer and then sends the voice data to the SIP soft terminal of the monitoring personnel (2-1) in real time;
Step 03, the SIP soft terminal of the monitoring personnel (2-1) receives the above voice data and plays it to the monitoring personnel for monitoring;
Step 04, it is judged whether the call is finished, wherein
if it is finished, the SIP soft terminal of the monitored telephonist (3-1) stops the voice mixing and the sending of the voice data and herein the monitoring is ended; and
if it is not finished, return to Step 02 and repeat.

2. The method for a calling center system to monitor by using a SIP soft terminal according to claim 1, wherein it is added between the Steps 03 and 04 in the monitoring method a step of the monitoring personnel selecting to finish the monitoring, which is performed as follows:
it is judged whether the monitoring personnel stops the monitoring, wherein
if the monitoring personnel stops the monitoring, the monitoring personnel sends a monitoring end request to the SIP soft terminal of the monitored telephonist (3-1) via the application server (1) by means of the position module, and the SIP soft terminal (3-1), after receiving the request, stops the voice mixing and the sending of the voice data, and herein the monitoring is ended; and
if the monitoring personnel does not stop the monitoring, perform step 04.

3. The method for a calling center system to monitor by using a SIP soft terminal according to claim 1 or 2, wherein in the above Step 02, the process of the SIP soft terminal of the monitored telephonist (3-1) mixing the voice and sending the voice data by the following steps:
Step 001, when the monitoring is activated, the monitored telephonist saves the voice information of the communication with the customer into a buffering area of a sound inputting device (5) via the position system, the SIP soft terminal of the monitored telephonist (3-1) periodically writes the voice data in the buffering area of the sound inputting device into an internal buffering area (6-1) and simultaneously the SIP soft terminal also writes the voice data sent to the position system by the customer side into the other internal buffering area (6-2);
Step 002, the voice data in the above two internal buffering areas are mixed by using a voice mixing algorithm, then the processed voice data is coded and packaged according to a coding and decoding method designated in the voice monitoring, and afterwards the data package is sent to the IP address and port of the SIP soft terminal of the monitoring personnel for receiving a voice data package.

4. The method for a calling center system to monitor by using a SIP soft terminal according to claim 3, wherein the voice mixing of the Step 002 in the Step 02 is performed as follows:
firstly the data in the above two internal buffering areas (6-1 and 6-2) are respectively transformed into linear coding which are then subjected to a corresponding summation operation to obtain the required voice data that is used for coding and sent to the SIP soft terminal of the monitoring personnel (2-1).

5. The method for a calling center system to monitor by using a SIP soft terminal according to claim 3, wherein the SIP soft terminal of the monitoring personnel (2-1) receives the data package sent by the SIP soft terminal of the monitored personnel (3-1), and performs the monitoring after decoding.

6. A calling center system, wherein the calling center system comprises an application server (1) for a call controlling and a position module for answering a customer wherein the position module includes a position module of a monitored telephonist (3) and a position module of monitoring personnel (2), and wherein the calling center system further comprises: a SIP soft terminal (3-1) in the position module of the monitored telephonist and a SIP soft terminal (2-1) in the position module of the monitoring personnel, wherein
the SIP soft terminal running in the side of the position module of the monitored telephonist (3-1) is configured to set up a bidirectional voice data link with the customer, to receive the voice data, to receive the monitoring request sent to the position module of the monitored telephonist (3) by the application server (1), to mix the voice data of the monitored telephonist and the customer, package, and to send it to the SIP soft terminal of the monitoring personnel (2-1); and
the SIP soft terminal running in the side of the position module of the monitoring personnel (2-1) is configured to receive the data package sent from the SIP soft terminal of the monitored telephonist side (3-1) and to play it to the monitoring personnel for monitoring.

7. The calling center system according to claim 6, wherein the SIP soft terminal of the monitored telephonist side (3-1) comprises:
a data forwarding (3-1-1) unit for picking up the voice data of the communication between the monitored telephonist and the customer saved in the buffering area of the sound inputting device (5) of the monitored telephonist side and writing it into one internal buffering area (6-1) of the position module;
a voice data receiving unit (3-1-5) for setting up a bidirectional voice data link with the customer (4), receiving the voice data sent by the customer side and writing the data into the other internal buffering area (6-2) of the position module of the monitored telephonist;
a voice mixing unit (3-1-2) for performing a voice mixing algorithm process on the voice data in the above two internal buffering areas;
a coding unit (3-1-3) for coding the voice data output by the voice mixing unit according to a coding and decoding method designated by the monitoring voice; and
a sending unit (3-1-4) for packaging the voice data output by the coding unit (3-1-3) and sending it to the IP address and port of the SIP soft terminal of the monitoring personnel side (2-1) for receiving a voice data package.

8. The calling center system according to claim 7, wherein the voice mixing unit comprises:
a linear coding unit (3-1-2-1) for transforming the voice data in the above two internal buffering areas into linear coding; and
a summation unit (3-1-2-2) for performing summation operation on the linear coding data in the two internal buffering areas and the voice data output by the summation unit is received by the coding unit.

9. The calling center system according to claim 6 or 7, wherein the SIP soft terminal of the monitoring personnel side comprises:
a data receiving unit (2-1-1) for receiving the data package sent from the SIP soft terminal of the monitored telephonist side; and
a decoding unit (2-1-2) for decoding the data package received by the data receiving unit.

10. A computer program product for a calling center system to monitor by using a SIP soft terminal, which computer program product comprises instructions for causing processors to perform the steps of:
Step 01, when receiving a monitoring request sent by a monitoring personnel, an application server informs the SIP soft terminal of a monitored telephonist to activate monitoring function via agent software of the monitored telephonist;
Step 02, after the monitoring is activated, the SIP soft terminal of the monitored telephonist mixes the voices of the communication between the telephonist and a customer and then sends the voice data to the SIP soft terminal of the monitoring personnel in real time;
Step 03, the SIP soft terminal of the monitoring personnel receives the above voice data and plays it to the monitoring personnel for monitoring;
Step 04, it is judged whether the call is finished, wherein
if it is finished, the SIP soft terminal of the monitored telephonist stops the voice mixing and the sending of the voice data and herein the monitoring is ended; and
if it is not finished, return to Step 02 and repeat.

## Patentansprüche

1. Verfahren für ein Anrufcentersystem zur Realisierung einer Überwachung durch Verwenden eines SIP-Soft-Endgeräts, wobei das Verfahren die folgenden Schritte umfasst:
Schritt 01, wenn eine Überwachungsanfrage erhalten wird, die von einem Telefonisten geschickt wurde, informiert ein Anwendungsserver (1) das SIP-Soft-Endgerät eines überwachten Telefonisten (3-1), um eine Überwachungsfunktion mittels Agentensoftware des überwachten Telefonisten zu aktivieren;
Schritt 02, nach Aktivieren der Überwachungsfunktion, mischt das SIP-Soft-Endgerät des überwachten Telefonisten (3-1) die Stimmen der Kommunikation zwischen dem Telefonisten und einem Kunden mischt und sendet dann die Stimmendaten in Echtzeit an das SIP-Soft-Endgerät des Überwachungspersonals (2-1);
Schritt 03, das SIP-Soft-Endgerät des Überwachungspersonals (2-1) erhält die obigen Stimmendaten und spielt sie für das berwachungspersonal zur Überwachung ab;
Schritt 04, es wird beurteilt, ob der Anruf beendet ist, wobei
wenn er beendet ist, das SIP-Soft-Endgerät des überwachten Telefonisten (3-1) das Mischen der Stimmen und das Senden der Stimmendaten stoppt und dadurch die Überwachung beendet wird; und
wenn er nicht beendet ist, zu Schritt 02 zurückkehrt und wiederholt.

2. Verfahren für ein Anrufcentersystem zur Realisierung einer Überwachung durch Verwendung eines SIP-Soft-Endgeräts nach Anspruch 1, wobei zwischen die Schritte 03 und 04 des Überwachungsverfahren ein Schritt hinzugefügt wird, in dem das Überwachungspersonal das Beenden der Überwachung wählt, was wie folgt durchgeführt wird:
es wird beurteilt, ob das Überwachungspersonal die Überwachung stoppt, wobei
wenn das Überwachungspersonal die Überwachung stoppt, sendet das Überwachungspersonal eine Anfrage zum Beenden der Überwachung an das SIP-Soft-Endgerät des überwachten Telefonisten (3-1) mittels des Anwendungsserver (1) mithilfe des Positionsmoduls, und das SIP-Soft-Endgerät (3-1) stoppt, nach Empfangen der Anfrage, das Mischen der Stimmen und das Senden der Stimmendaten und dadurch wird die Überwachung beendet; und
wenn das Uberwachungspersonal die Überwachung nicht stoppt, führe Schritt 04 durch.

3. Verfahren für ein Anrufcentersystem zur Realisierung einer Überwachung durch Verwendung eines SIP-Soft-Endgeräts nach Anspruch 1 oder 2, wobei im obigen Schritt 02 der Vorgang des Mischens der Stimmen und des Sendens der Stimmendaten durch das SIP-Soft-Endgerät des überwachten Telefonisten (3-1) in folgenden Schritten durchgeführt wird:
Schritt 001, wenn die Überwachung aktiviert ist, speichert der überwachte Telefonist die Stimminformation der Kommunikation mit dem Kunden in einem Pufferbereich eines Toneingabegeräts (5) über das Positionssystem, das SIP-Soft-Endgerät des überwachten Telefonisten (3-1) schreibt die Stimmendaten im Pufferbereich des Toneingabegeräts periodisch in einen internen Pufferbereich (6-1) schreibt und gleichzeitig schreibt das SIP-Soft-Endgerät auch die Stimmendaten, die von der Kundenseite an das Positionssystem gesendet werden, in den anderen internen Pufferbereich (6-2);
Schritt 002, die Stimmendaten werden in den obigen zwei internen Pufferbereichen unter Verwendung eines Stimm-Mischalgorithmus gemischt, dann werden die verarbeiteten Stimmendaten nach einem in der Stimmüberwachung vorgesehenen Verschlüsselungs- und Entschlüsselungsverfahren verschlüsselt und gepackt werden, und anschließend wird das Datenpaket an die IP-Adresse und den Anschluss des SIP-Soft-Endgeräts des Überwachungspersonals zum Empfangen eines Stimmendatenpakets gesendet.

4. Verfahren für ein Anrufcentersystem zur Realisierung einer Überwachung durch Verwendung eines SIP-Soft-Endgeräts nach Anspruch 3, wobei das Mischen der Stimmen von Schritt 002 in Schritt 02 wie folgt durchgeführt wird:
Zuerst werden die Daten in den obigen zwei internen Pufferbereichen (6-1 und 6-2) jeweils in eine lineare Verschlüsselung umgesetzt, die dann einer entsprechenden Summierungsoperation unterzogen werden, um die erforderlichen Stimmendaten zu erhalten, die zur Verschlüsselung verwendet und an das SIP-Soft-Endgerät des Überwachungspersonals (2-1) gesendet werden.

5. Verfahren für ein Anrufcentersystem zur Realisierung einer Überwachung durch Verwendung eines SIP-Soft-Endgeräts nach Anspruch 3, wobei das SIP-Soft-Endgerät des Überwachungspersonals (2-1) das vom SIP-Soft-Endgerät des überwachten Personals (3-1) gesendete Datenpaket empfängt und nach der Entschlüsselung die Überwachung durchführt.

6. Anrufcentersystem, wobei das Anrufcentersystem einen Anwendungsserver (1) für eine Anrufkontrolle und ein Positionsmodul, um einem Kundenzu antworten, umfasst, wobei das Positionsmodul ein Positionsmodul eines überwachten Telefonisten (3) und ein Positionsmodul von Überwachungspersonal (2) enthält, und wobei das Anrufcentersystem ferner umfasst: ein SIP-Soft-Endgerät (3-1) im Positionsmodul des überwachten Telefonisten und ein SIP-Soft-Endgerät (2-1 im Positionsmodul des Überwachungspersonals, wobei
das SIP-Soft-Endgerät, das in der Seite des Positionsmoduls des überwachten Telefonisten (3-1) läuft, konfiguriert ist, um eine bidirektionale Datenverbindung mit dem Kunden herzustellen, um die Stimmendaten zu empfangen, um die Uberwachungsanfrage zu empfangen, die vom Anwendungsserver (1) an das Positionsmodul des überwachten Telefonisten (3) gesendet wurde, um die Stimmendaten des überwachten Telefonisten und des Kunden zu mischen, diese zu packen und an das SIP-Soft-Endgerät des Überwachungspersonals (2-1) zu senden; und
das SIP-Soft-Endgerät, das in der Seite des Positionsmoduls des Überwachungspersonals (2-1) konfiguriert ist, um das vom SIP-Soft-Endgerät der überwachten Telefonistenseite (3-1) zu empfangen und es für das Uberwachungspersonal zur Überwachung abzuspielen.

7. Anrufcentersystem nach Anspruch 6, wobei das SIP-Soft-Endgerät auf Seite des überwachten Telefonisten (3-1) umfasst:
eine Datenweiterleitungseinheit (3-1-1) zum Abholen der im Pufferbereich des Klangeingabegeräts (5) der überwachten Telefonistenseite gespeicherten Stimmendaten der Kommunikation zwischen dem überwachten Telefonisten und dem Kunden, und Schreiben der Daten in einen internen Pufferbereich (6-1) des Positionsmoduls;
eine Stimmendatenempfangseinheit (3-1-5) zum Einrichten einer bidirektionalen Stimmendatenverbindung mit dem Kunden (4), Empfangen der von der Kundenseite gesendeten Stimmendaten, und Schreiben der Daten in den anderen internen Pufferbereich (6-2) des Positionsmoduls des überwachten Telefonisten;
eine Stimmenmischeinheit (3-1-2) zur Durchführung eines Stimmenmischalgorithmusprozesses an den Stimmendaten in den obigen zwei internen Pufferbereichen;
eine Verschlüsselungseinheit (3-1-3) zur Verschlüsselung der Stimmendatenausgabe durch die Stimmenmischeinheit nach einem Verschlüsselungs- und Entschlüsselungsverfahren, bestimmt durch die Überwachungsstimme; und
eine Sendeeinheit (3-1-4) zum Packen der Stimmendatenausgabe durch die Verschlüsselungseinheit (3-1-3) und Senden des Pakets an die IP-Adresse und den Anschluss des SIP-Soft-Endgeräts der Überwachungspersonalseite (2-1) zum Empfangen eines Stimmendatenpakets.

8. Anrufcentersystem nach Anspruch 7, wobei die Stimmenmischeinheit umfasst:
eine lineare Verschlüsselungseinheit (3-1-2-1) zum Transformieren der Stimmendaten in den obigen zwei internen Pufferbereichen in lineare Verschlüsselung; und
eine Summierungseinheit (3-1-2-2) zum Durchführen einer Summierungsoperation an den linearen Verschlüsselungsdaten in den zwei internen Pufferbereichen, und die Stimmendatenausgabe durch die Summierungseinheit durch die Verschlüsselungseinheit empfangen wird.

9. Anrufcentersystem nach Anspruch 6 oder 7, wobei das SIP-Soft-Endgerät der Überwachungspersonalseite umfasst:
eine Datenempfangseinheit (2-1-1) zum Empfangen des von dem SIP-Soft-Endgeräts der überwachten Telefonistenseite gesendeten Datenpakets; und
eine Entschlüsselungseinheit (2-1-2) zum Entschlüsseln des durch die Datenempfangseinheit empfangenen Datenpakets.

10. Computerprogrammprodukt für ein Anrufcentersystem zur Realisierung einer Überwachung durch Verwendung eines SIP-Soft-Endgeräts, wobei das Computerprogrammprodukt Anweisungen umfasst, um Prozessoren folgende Schritte ausführen zu lassen:
Schritt 01, wenn eine von einem Überwachungspersonal gesendete Überwachungsanfrage empfangen wird, informiert ein Anwendungsserver das SIP-Soft-Endgerät eines überwachten Telefonisten, eine Überwachungsfunktion mittels Agentensoftware des überwachten Telefonisten zu aktivieren;
Schritt 02, nachdem die Überwachung aktiviert ist, mischt das SIP-Soft-Endgerät des überwachten Telefonisten die Stimmen der Kommunikation zwischen dem Telefonisten und einem Kunden und sendet die Stimmendaten dann in Echtzeit an das SIP-Soft-Endgerät des Überwachungspersonals;
Schritt 03, das SIP-Soft-Endgerät des Überwachungspersonals empfängt die obigen Stimmendaten und spielt sie für das Überwachungspersonal zur Überwachung ab;
Schritt 04, es wird beurteilt, ob der Anruf beendet ist, wobei
wenn er beendet ist, das SIP-Soft-Endgerät des überwachten Telefonisten das Mischen der Stimmen und das Senden der Stimmendaten stoppt und dadurch die Überwachung beendet; und
wenn er nicht beendet ist, kehre zu Schritt 02 zurück und wiederhole.

## Revendications

1. Procédé destiné à permettre à un système de centre d'appel d'effectuer une surveillance au moyen d'un terminal léger de protocole SIP, dans lequel le procédé comprend les étapes ci-dessous :
étape 01, lors de la réception d'une demande de surveillance envoyée par un personnel de surveillance, un serveur d'application (1) invite le terminal léger de protocole SIP d'un opérateur téléphonique surveillé (3-1) à activer une fonction de surveillance par l'intermédiaire d'un logiciel agent de l'opérateur téléphonique surveillé ;
étape 02, dès lors que la fonction de surveillance a été activée, le terminal léger de protocole SIP de l'opérateur téléphonique surveillé (3-1) mélange les données vocales de la communication entre l'opérateur téléphonique et un client, et envoie ensuite les données vocales au terminal léger de protocole SIP du personnel de surveillance (2-1) en temps réel ;
étape 03, le terminal léger de protocole SIP du personnel de surveillance (2-1) reçoit les données vocales susmentionnées et lit ces données au personnel de surveillance en vue de leur surveillance ;
étape 04, il est déterminé si l'appel est terminé, dans lequel
si l'appel est terminé, le terminal léger de protocole SIP de l'opérateur téléphonique surveillé (3-1) interrompt le mélange de données vocales et l'envoi des données vocales, et il est mis fin à la surveillance ; et
si l'appel n'est pas terminé, les étapes sont répétées à partir de l'étape 02.

2. Procédé destiné à permettre à un système de centre d'appel d'effectuer une surveillance au moyen d'un terminal léger de protocole SIP selon la revendication 1, dans lequel est ajoutée, entre les étapes 03 et 04 du procédé de surveillance, une étape dans laquelle le personnel de surveillance choisit de mettre fin à la surveillance, cette étape étant mise en oeuvre comme suit :
il est déterminé si le personnel de surveillance interrompt la surveillance, dans lequel
si le personnel de surveillance interrompt la surveillance, le personnel de surveillance envoie une demande d'interruption de surveillance au terminal léger de protocole SIP de l'opérateur téléphonique surveillé (3-1) par l'intermédiaire du serveur d'application (1), au moyen du module de positionnement, et le terminal léger de protocole SIP (3-1), à l'issue de la réception de la demande, met fin au mélange de données vocales et à l'envoi des données vocales, et la surveillance est alors terminée ; et
si le personnel de surveillance ne met pas fin à la surveillance, l'étape 04 est mise en oeuvre.

3. Procédé destiné à permettre à un système de centre d'appel d'effectuer une surveillance au moyen d'un terminal léger de protocole SIP selon la revendication 1 ou 2, dans lequel, à l'étape 02 ci-dessus, le processus où le terminal léger de protocole SIP de l'opérateur téléphonique surveillé (3-1) mélange les données vocales et envoie les données vocales est mis en oeuvre en faisant appel aux étapes ci-dessous :
étape 001, lorsque la surveillance est activée, l'opérateur téléphonique surveillé enregistre les informations vocales de la communication avec le client dans une zone de mise en mémoire tampon d'un dispositif d'entrée sonore (5), par l'intermédiaire du système de positionnement, le terminal léger de protocole SIP de l'opérateur téléphonique surveillé (3-1) écrit périodiquement les données vocales de la zone de mise en mémoire tampon du dispositif d'entrée sonore au sein d'une zone de mise en mémoire tampon interne (6-1) et, simultanément, le terminal léger de protocole SIP écrit également les données vocales envoyées au système de positionnement depuis le côté client dans l'autre zone de mise en mémoire tampon interne (6-2) ;
étape 002, les données vocales des deux zones de mise en mémoire tampon internes ci-dessus sont mélangées au moyen d'un algorithme de mélange de données vocales, les données vocales traitées sont ensuite codées et mises en paquet selon un procédé de codage et décodage désigné au cours de la surveillance de données vocales, après quoi le paquet de données est envoyé sur l'adresse IP et sur le port du terminal léger de protocole SIP du personnel de surveillance, en vue de recevoir un paquet de données vocales.

4. Procédé destiné à permettre à un système de centre d'appel d'effectuer une surveillance au moyen d'un terminal léger de protocole SIP selon la revendication 3, dans lequel le mélange de données vocales de l'étape 002 est mis en oeuvre à l'étape 02 comme suit :
dans un premier temps, les données présentes dans les deux zones de mise en mémoire tampon internes susmentionnées (6-1 et 6-2) sont respectivement transformées par codage linéaire, elles sont ensuite soumises à une opération de sommation correspondante en vue d'obtenir les données vocales requises qui sont utilisées pour le codage et envoyées au terminal léger de protocole SIP du personnel de surveillance 2-1).

5. Procédé destiné à permettre à un système de centre d'appel d'effectuer une surveillance au moyen d'un terminal léger de protocole SIP selon la revendication 3, dans lequel le terminal léger de protocole SIP du personnel de surveillance (2-1) reçoit le paquet de données envoyé par le terminal léger de protocole SIP du personnel surveillé (3-1), et met en oeuvre la surveillance postérieurement au décodage.

6. Système de centre d'appel, dans lequel le système de centre d'appel comprend un serveur d'application (1) destiné à commander un appel, et un module de positionnement destiné à répondre à un client, dans lequel le module de positionnement inclut un module de positionnement d'un opérateur téléphonique surveillé (3) et un module de positionnement de personnel de surveillance (2), et dans lequel le système de centre d'appel comprend en outre : un terminal léger de protocole SIP (3-1) dans le module de positionnement de l'opérateur téléphonique surveillé et un terminal léger de protocole SIP (2-1) dans le module de positionnement du personnel de surveillance, dans lequel
le terminal léger de protocole SIP exécuté du côté du module de positionnement de l'opérateur téléphonique surveillé (3-1) est configuré de manière à établir une liaison de données vocales bidirectionnelle avec le client, à recevoir les données vocales, à recevoir la demande de surveillance envoyée au module de positionnement de l'opérateur téléphonique surveillé (3) par le serveur d'application (1), à mélanger les données vocales de l'opérateur téléphonique surveillé et du client, à les mettre en paquet, et à les envoyer au terminal léger de protocole SIP du personnel de surveillance (2-1) ; et
le terminal léger de protocole SIP exécuté du côté du module de positionnement du personnel de surveillance (2-1) est configuré de manière à recevoir le paquet de données envoyé à partir du terminal léger de protocole SIP du côté de l'opérateur téléphonique surveillé (3-1) et à le lire au personnel de surveillance en vue de sa surveillance.

7. Système de centre d'appel selon la revendication 6, dans lequel le terminal léger de protocole SIP du côté de l'opérateur téléphonique surveillé (3-1) comprend :
une unité d'acheminement de données (3-1-1) destinée à collecter les données vocales de la communication entre le opérateur téléphonique surveillé et le client, enregistrées dans la zone de mise en mémoire tampon du dispositif d'entrée sonore (5) du côté de l'opérateur téléphonique surveillé, et à les écrire dans une zone de mise en mémoire tampon interne (6-1) du module de positionnement ;
une unité de réception de données vocales (3-1-5) destinée à établir une liaison de données vocales bidirectionnelle avec le client (4), à recevoir les données vocales envoyées par le côté client, et à écrire les données dans l'autre zone de mise en mémoire tampon interne (6-2) du module de positionnement de l'opérateur téléphonique surveillé ;
une unité de mélange de données vocales (3-1-2) destinée à mettre en oeuvre un processus d'algorithme de mélange de données vocales sur les données vocales dans les deux zones de mise en mémoire tampon internes susmentionnées ;
une unité de codage (3-1-3) destinée à coder les données vocales générées en sortie par l'unité de mélange de données vocales selon un procédé de codage et décodage désigné lors de l'étape de surveillance des données vocales ;
une unité d'envoi (3-1-4) destinée à mettre en paquet les données vocales générées en sortie par l'unité de codage (3-1-3) et à les envoyer sur l'adresse IP et sur le port du terminal léger de protocole SIP du côté du personnel de surveillance (2-1), en vue de recevoir un paquet de données vocales.

8. Système de centre d'appel selon la revendication 7, dans lequel l'unité de mélange de données vocales comprend :
une unité de codage linéaire (3-1-2-1) destinée à transformer les données vocales dans les deux zones de mise en mémoire tampon internes susmentionnées, au moyen d'un codage linéaire ; et
une unité de sommation (3-1-2-2) destinée à mettre en oeuvre une opération de sommation sur les données de codage linéaire dans les deux zones de mise en mémoire tampon internes, et où les données vocales générées en sortie par l'unité de sommation sont reçues par l'unité de codage.

9. Système de centre d'appel selon la revendication 6 ou 7, dans lequel le terminal léger de protocole SIP du côté du personnel de surveillance comprend :
une unité de réception de données (2-1-1) destinée à recevoir le paquet de données envoyé à partir du terminal léger de protocole SIP du côté de l'opérateur téléphonique surveillé ; et
une unité de décodage (2-1-2) destinée à décoder le paquet de données reçu par l'unité de réception de données.

10. Produit-programme informatique destiné à permettre à un système de centre d'appel d'effectuer une surveillance au moyen d'un terminal léger de protocole SIP, dans lequel le produit-programme informatique comprend des instructions destinées à amener des processeurs à mettre en oeuvre les étapes ci-dessous dans lesquelles :
étape 01, lors de la réception d'une demande de surveillance envoyée par un personnel de surveillance, un serveur d'application invite le terminal léger de protocole SIP d'un opérateur téléphonique surveillé à activer une fonction de surveillance par l'intermédiaire d'un logiciel agent de l'opérateur téléphonique surveillé ;
étape 02, dès lors que la fonction de surveillance a été activée, le terminal léger de protocole SIP de l'opérateur téléphonique surveillé mélange les données vocales de la communication entre l'opérateur téléphonique et un client, et envoie ensuite les données vocales au terminal léger de protocole SIP du personnel de surveillance en temps réel ;
étape 03, le terminal léger de protocole SIP du personnel de surveillance reçoit les données vocales susmentionnées et lit ces données au personnel de surveillance en vue de leur surveillance ;
étape 04, il est déterminé si l'appel est terminé, dans lequel
si l'appel est terminé, le terminal léger de protocole SIP de l'opérateur téléphonique surveillé interrompt le mélange de données vocales et l'envoi des données vocales, et il est mis fin à la surveillance ; et
si l'appel n'est pas terminé, les étapes sont répétées à partir de l'étape 02.
